# EUROPEAN PATENT APPLICATION

(11) **EP 4 742 679 A1**
(43) Date of publication of application: **13.05.2026**
(21) Application number: 24838491.9
(22) Date of filing: 06.06.2024
(51) Int. Cl.: H04N 21/236

(54) **DATA PROCESSING METHOD AND APPARATUS, AND ELECTRONIC DEVICE AND STORAGE MEDIUM**

(30) Priority: 07.07.2023 CN 202310829915
(71) Applicant: Lemon Inc., Grand Cayman, KY1-1205 (KY); Beijing Zitiao Network Technology Co., Ltd., Beijing 100190 (CN)
(72) Inventor: ZHANG, Yilin, Los Angeles, California 90066 (US); LI, Bochen, Los Angeles, California 90066 (US); YAO, Shawn, Culver City, California 90230 (US); SHEN, Lingxuan, Beijing 100028 (CN); PEI, Xiu, Beijing 100028 (CN); PAN, Xitong, Beijing 100028 (CN)
(74) Representative: Marks & Clerk LLP
(86) International application number: PCT/CN2024/097871
(87) International publication number: WO 2025/011233

(57) **Abstract**

Provided in the embodiments of the present disclosure is a data processing method. The method comprises: in response to a first operation performed by a user, obtaining a first video, the first video comprising a first set of images and a first voice, and a timestamp of each frame image in the first set of images being the same as a timestamp of a corresponding first syllable in the first voice; and in response to a second operation performed by the user, playing a second video, the second video comprising the first set of images, a stretched first voice, and background music, and a timestamp of a stretched first syllable in the stretched first voice being the same as a timestamp of a beat in the background music, and a timestamp of each frame image in the first set of images in the second video being the same as a timestamp of a corresponding stretched first syllable in the stretched first voice.

## Description

### CROSS-REFERENCE TO RELATED APPLICATION

The present application claims priority to Chinese Patent Application No. 202310829915.2, entitled "DATA PROCESSING METHOD AND APPARATUS, AND ELECTRONIC DEVICE AND STORAGE MEDIUM" filed on July 7, 2023, the disclosure of which is incorporated herein by reference in its entirety.

### FIELD

The present disclosure relates to the field of audio and video processing, and in particular, to a data processing method, apparatus, electronic device, and storage medium.

### BACKGROUND

Currently, there are various audio and video processing applications available on the market. Users can process recorded audio and video through such applications, for example, by adding props to the video or adding background music to the video.

### SUMMARY

Embodiments of the present disclosure provide a data processing method, apparatus, electronic device, and storage medium, which are capable of converting voice into music having a certain musical style.

According to a first aspect, an embodiment of the present disclosure provides a data processing method, comprising:
in response to a first operation performed by a user, obtaining a first video, the first video comprising a first set of images and a first voice, and a timestamp of each frame image in the first set of images being the same as a timestamp of a corresponding first syllable in the first voice; and
in response to a second operation performed by the user, playing a second video, the second video comprising the first set of images, a stretched first voice, and background music, and a timestamp of a stretched first syllable in the stretched first voice being the same as a timestamp of a beat in the background music, and a timestamp of each frame image in the first set of images in the second video being the same as a timestamp of a corresponding stretched first syllable in the stretched first voice.

According to a second aspect, an embodiment of the present disclosure provides a data processing apparatus, comprising:
an obtaining unit, configured to obtain a first video, in response to a first operation performed by a user, the first video comprising a first set of images and a first voice, and a timestamp of each frame image in the first set of images being the same as a timestamp of a corresponding first syllable in the first voice; and
a playing unit, configured to play a second video, in response to a second operation performed by the user, the second video comprising the first set of images, a stretched first voice, and background music, and a timestamp of a stretched first syllable in the stretched first voice being the same as a timestamp of a beat in the background music, and a timestamp of each frame image in the first set of images in the second video being the same as a timestamp of a corresponding stretched first syllable in the stretched first voice.

According to a third aspect, an embodiment of the present disclosure provides an electronic device, comprising: a processor; and a memory configured to store computer executable instructions, wherein the computer executable instructions, when executed, cause the processor to implement steps of the method described in the first aspect.

According to a fourth aspect, an embodiment of the present disclosure provides a computer readable storage medium for storing computer executable instructions, and the computer executable instructions, when executed by a processor, implement steps of the method described in the first aspect.

In one or more embodiments of the present disclosure, a second video can be played based on a user operation. Compared with a first video, the second video includes not only a first set of images, but also a stretched first voice and background music. A timestamp of a stretched first syllable in the stretched first voice is the same as a timestamp of a beat in the background music, such that the stretched first voice and the background music are combined to form music with a certain musical style, thereby achieving the technical effect of converting voice into music. Furthermore, a timestamp of each frame image in the first set of images in the second video is the same as a timestamp of a corresponding stretched first syllable in the stretched first voice, such that each frame image is synchronously displayed and played with the corresponding stretched first syllables during playback, thereby improving the user experience in viewing the video.

### BRIEF DESCRIPTION OF THE DRAWINGS

In order to more clearly illustrate technical solutions in one or more embodiments of the present disclosure or in the prior art, the drawings required for use in the description of the embodiments or the prior art will be briefly introduced below. It should be understood that the drawings described below merely illustrate some embodiments disclosed herein, and those of ordinary skill in the art may also derive other drawings based on these drawings without any inventive effort.
FIG. 1 is a schematic flow diagram of a data processing method according to an embodiment of the present disclosure;
FIG. 2a is a schematic diagram of obtaining a first video according to an embodiment of the present disclosure;
FIG. 2b is another schematic diagram of obtaining a first video according to an embodiment of the present disclosure;
FIG. 3 is a schematic diagram of stretching a first voice according to an embodiment of the present disclosure;
FIG. 4a is a schematic diagram of a user selection of a musical style according to an embodiment of the present disclosure;
FIG. 4b is a schematic diagram of a user selection of a musical style according to another embodiment of the present disclosure;
FIG. 5 is a schematic diagram of stretching a first stressed syllable in each voice segment of a first voice according to an embodiment of the present disclosure;
FIG. 6 is a schematic diagram of a first audio energy according to an embodiment of the present disclosure;
FIG. 7 is a schematic diagram of stretching a timestamp of a second syllable according to an embodiment of the present disclosure;
FIG. 8 is a schematic diagram of a volume peak of a first syllable according to an embodiment of the present disclosure;
FIG. 9 is a structural schematic diagram of a data processing apparatus according to an embodiment of the present disclosure;
FIG. 10 is a structural schematic diagram of an electronic device according to an embodiment of the present disclosure.

### DETAILED DESCRIPTION OF EMBODIMENTS

In order to enable those skilled in the art to better understand the technical solutions of one or more embodiments of the present disclosure, the technical solutions of one or more embodiments of the present disclosure will be clearly and completely described below in conjunction with the accompanying drawings of the one or more embodiments of the present disclosure. It is evident that the described embodiments are only part of the embodiments of the present disclosure, and not all embodiments. All other embodiments obtained by those of ordinary skill in the art based on one or more embodiments of the present disclosure without inventive effort shall fall within the scope of protection of the present disclosure.

The disclosed embodiments provide a data processing method capable of converting voice into music with a certain musical style.

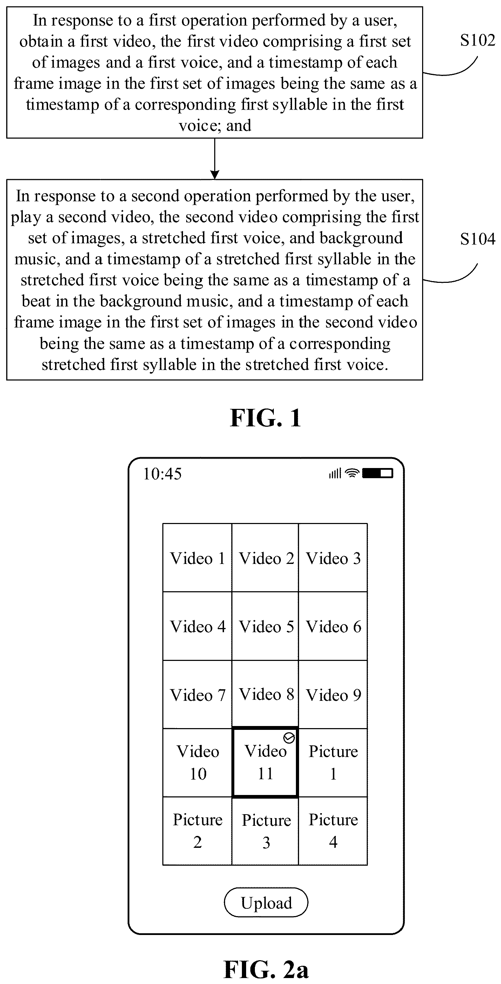

FIG. 1 is a schematic flow diagram of a data processing method according to an embodiment of the present disclosure. As shown in FIG. 1, the method comprises:
Step S102: A first video is obtained in response to a first operation performed by a user, wherein the first video comprises a first set of images and a first voice, and a timestamp of each frame image in the first set of images is the same as a timestamp of a corresponding first syllable in the first voice; and
Step S104: A second video is played in response to a second operation performed by the user, wherein the second video comprises the first set of images, a stretched first voice, and background music, and a timestamp of a stretched first syllable in the stretched first voice is the same as a timestamp of a beat in the background music, and a timestamp of each frame image in the first set of images in the second video is the same as a timestamp of a corresponding stretched first syllable in the stretched first voice.

By implementing the present embodiment, the second video can be played based on the user operation. Compared with the first video, the second video includes not only the first set of images, but also the stretched first voice and background music. The timestamp of the stretched first syllable in the stretched first voice is the same as the timestamp of the beat in the background music, such that the stretched first voice and the background music are combined to form music with a certain musical style, thereby achieving the technical effect of converting voice into music. Furthermore, the timestamp of each frame image in the first set of images in the second video is the same as the timestamp of the corresponding stretched first syllable in the stretched first voice, such that each frame image is synchronously displayed and played with the corresponding stretched first syllables during playback, thereby improving the user experience in viewing the video.

The method of this embodiment may be executed by a terminal device running an audio and video processing application. The terminal device includes, but is not limited to, a mobile phone, a computer, a tablet computer, an in-vehicle computer, a wearable device, and other electronic device. In this embodiment, the user may perform the first operation within the audio and video processing application, and the audio and video processing application obtains the first video in response to the first operation. The first video includes the first set of images and first voice. The timestamp of each frame image in the first set of images is the same as the timestamp of the corresponding first syllable in the first voice. For example, each frame image in the first set of images have a display timestamp, and each first syllable in the first voice have a start playback timestamp. The display timestamp of each frame image in the first set of images is the same as the start playback timestamp of the corresponding first syllable in the first voice. In other words, at the same moment, a certain frame image in the first set of images is synchronously displayed and played with the corresponding first syllable in the first voice, such that the first set of images and the first voice cooperate with each other, thereby improving the user experience in viewing the first video. For example, in a case where the first video is a narrative video, a certain frame image in the first set of images is synchronously displayed and played with the corresponding first syllable in the first voice at the same moment, thereby achieving an effect in which respective frame images in the first set of images is narrated with the first voice.

It should be understood that, prior to implementing the technical solutions disclosed in various embodiments of the disclosure, the user shall be informed, in an appropriate manner and in accordance with relevant laws and regulations, of the type, the scope of use, the usage scenario, and the like of personal information involved in the disclosure, and the user's authorization shall be obtained.

For example, in response to receiving an active request from the user, a prompt message may be sent to the user to explicitly inform the user that the operation requested to be executed will require access to and use of the user's personal information. As such, the user may autonomously determine, based on the prompt message, whether to provide personal information to the software or hardware that performs operation(s) of the technical solution(s) of the disclosure, such as an electronic device, an application, a server, or a storage medium.

As an optional but non-limiting implementation, in response to receiving an active request from a user, a prompt message may be sent to the user, for example, in a form of a pop-up window. The pop-up window may present the prompt message in a textual form. In addition, the pop-up window may further carry selection controls for the user to determine whether to "agree" or "disagree" to provide personal information to the electronic device.

It should be understood that the above-mentioned process of notification and obtaining user authorization is merely illustrative and does not constitute a limitation on the implementations of the present disclosure. Other method(s) that comply with relevant laws and regulations may also be applied to the implementations of the present disclosure.

It should be understood that the data involved in the present technical solution (including, but not limited to, the data itself, and the acquisition or use of the data) shall comply with the requirements of applicable laws, regulations, and relevant provisions.

In this embodiment, the first voice may be a sound produced by a human, such as the human's speech voice, storytelling voice, cappella singing voice, nursery rhyme reading voice, and the like. The first voice may also be a sound produced by a machine that imitates the human voice, such as a speech voice, a storytelling voice, a cappella singing voice, a nursery rhyme reading voice, and the like, produced by the machine. It should be understood that, in this embodiment, the first voice is obtained with the user's authorization and consent, particularly when the first voice produced by a human is obtained with the user's authorization and consent.

In one embodiment, in the step S102 described above, in response to the first operation performed by the user, obtaining the first video comprises:
in response to a video upload operation performed by the user, obtaining the first video; or
in response to a recording operation performed by the user, obtaining the first video, the first video comprising the first voice recorded by the user.

In one case, the first operation includes the video upload operation. The audio and video processing application, in response to the video upload operation performed by the user, obtains the first video uploaded by the user, the first video including the first set of images and the first voice. FIG. 2a is a schematic diagram of obtaining a first video according to an embodiment of the present disclosure. As shown in FIG. 2a, the user may select a video to upload in a terminal device and click the "upload" button to upload the selected video as the first video into the audio and video processing application.

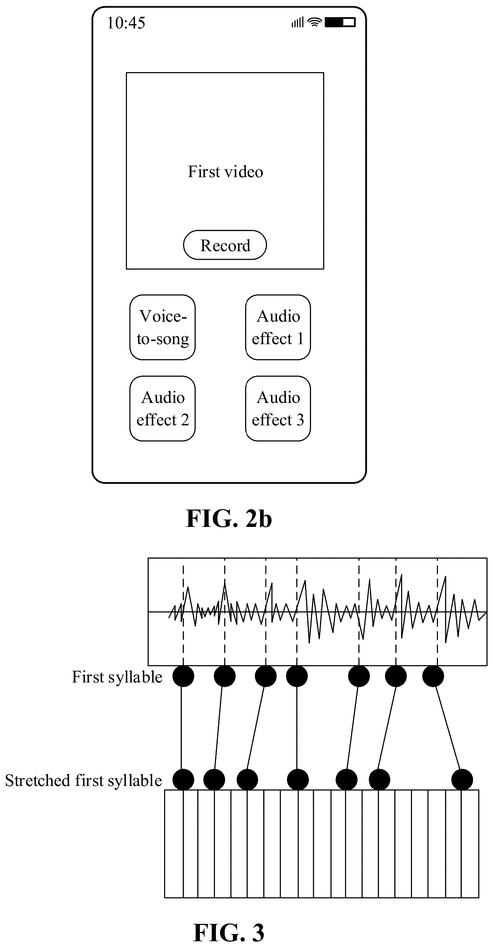

In another case, the first operation includes a recording operation. The audio and video processing application obtains the first video in response to the user performing the recording operation. The first video includes the aforementioned first set of images and further includes the first voice recorded by the user. FIG. 2b is a schematic diagram of obtaining a first video according to an embodiment of the present disclosure. As shown in FIG. 2b, after the first set of images is uploaded by the user in the audio and video processing application, the user may click a recording button within the audio and video processing application to record a matched first voice for the first set of images, such that the audio and video processing application obtains the first voice and uses the first voice and the previously obtained first set of images collectively as the first video. The process in which the user uploads the first set of images in the audio and video processing application may be: the user selecting a first set of images to be uploaded on a terminal device and clicking an "upload" button, such that the first set of images is uploaded into the audio and video processing application.

It can be seen that, by implementing this embodiment, the first video may be directly obtained through upload by the user, and the first audio in the first video may also be obtained by the user recording it for the first set of images, such that the upload requirements of the user for the first video in different scenarios can be satisfied.

In this embodiment, the second video may further be played in response to the second operation performed by the user. The second video comprises the first set of images, the stretched first voice, and the background music. The stretched first voice refers to the first voice in which the timestamp of the first syllable is stretched, and the timestamp of the first syllable includes, but are not limited to, a start playback timestamp, so the stretched first syllable is included in the stretched first voice.

In a case where no silent fraction is present in the first voice, an end playback timestamp of a preceding first syllable is the same as a start playback timestamp of a subsequent first syllable. In a case where a silent fraction is present in the first voice, the end playback timestamp of the preceding first syllable is not the same as the start playback timestamp of the subsequent first syllable. The end playback timestamp of the preceding first syllable may be obtained by detecting whether a sound is present. In this embodiment, the stretching refers to shifting the start playback timestamps of respective first syllables, for example, shifting the start playback timestamp forward or backward. The silent fraction is a fraction that contains no sound, which is detected from the first voice by using a sound detection technology.

The timestamp of the stretched first syllable in the stretched first voice is the same as the timestamp of the beat in the background music, and the timestamp of the beat includes, but is not limited to, a start timestamp of the beat. Since the timestamp of the stretched first syllable in the stretched first voice is the same as the timestamp of the beat in the background music, the stretched first voice can be played in coordination with the beat of the background music when the second video is played, thereby enhancing the musicality of the second video.

As described above, prior to stretching the timestamp of the first syllable, at a same moment, a certain frame image in the first set of images is synchronously displayed and played with a corresponding first syllable in the first voice, such that the first set of images is coordinated with the first voice, thereby improving the user experience in viewing the first video.

To ensure that the first set of images and the stretched first syllable are also coordinated with each other, in this embodiment, the timestamp of each frame image in the first set of images in the second video is the same as the timestamp of the corresponding stretched first syllable in the stretched first voice. That is, if, at the same moment, a certain frame image in the first set of images is synchronously displayed and played with a corresponding first syllable in the first voice, then, after stretching, at the same moment, a certain frame image in the first set of images is also synchronously displayed and played with a corresponding stretched first syllable in the first voice, such that the first set of images is coordinated with the stretched first voice, thereby improving the user experience in viewing the second video. In a specific example, in the first video, an image A in the first set of images is synchronously displayed and played with a first syllable 1 in the first voice, and thus, in the second video, the image A in the first set of images is also synchronously displayed and played with the stretched first syllable 1 in the first voice.

In one embodiment, a first correspondence relationship between each frame image in the first set of images and the first syllable in the first voice acts as a second correspondence relationship between each frame image in the first set of images and the stretched first syllable in the first voice. That is, if a certain frame image corresponds to a certain first syllable in the first voice, the frame image also corresponds to the stretched first syllable. The timestamp of each frame image in the first set of images in the second video is set to be the same as the timestamp of the corresponding stretched first syllable in the stretched first voice based on the second correspondence relationship, such that each frame image in the first set of images in the second video is synchronously displayed and played with the corresponding stretched first syllable in the stretched first voice.

FIG. 3 is a schematic diagram of stretching a first voice according to an embodiment of the present disclosure. In FIG. 3, first syllables and stretched first syllables are represented by dots, and beats in background music are represented by a grid. As shown in FIG. 3, the essence of the stretching lies in modifying the start playback timestamp of the first syllable in the first voice. For each first syllable, its playback timestamp is changed through stretching, and the playback timestamp of the stretched first syllable is the same as the timestamp of the beat in the background music. The playback timestamp of the first syllable may be the start playback timestamp of the first syllable. The timestamp of the beat in the background music may be the start timestamp of the beat in the background music.

In one embodiment, in the above step S104, in response to the second operation performed by the user, playing the second video comprises:
in response to a selection, by the user, of one music style control among a plurality of music style controls, playing the second video; the background music has a music style corresponding to the one music style control.

In this embodiment, the user enters a video processing interface of the audio and video processing application. The audio and video processing application obtains the first video of the user and obtains an accompaniment music according to a default music style. The first voice is stretched based on timestamps of beats in the accompaniment music. Instrumental sounds are added to the accompaniment music based on the stretched first voice to obtain the background music. The second video is generated based on the stretched first voice, the background music, and the first set of images, and is played. If the user determines, based on the played second video, that the default music style is unsatisfactory, the user may switch the selected music style control among the plurality of music style controls, so as to switch the music style of the accompaniment music. The audio and video processing application re-obtains the accompaniment music according to the switched music style of the accompaniment music, stretches the first voice based on timestamps of beats in the accompaniment music, adds instrumental sounds to the accompaniment music based on the stretched first voice to obtain the background music, generates the second video based on the stretched first voice, the background music, and the first set of images, and plays the second video.

It is understood that, since the background music is obtained by adding instrumental sounds to the accompaniment music, the background music possesses the musical style of the accompaniment music. The musical style of the accompaniment music is associated with the timestamps of the beats in the accompaniment music, and thus switching the musical style of the accompaniment music results in changing the accompaniment music and altering the timestamps of the beats in the accompaniment music, and accordingly, the audio and video processing application needs to re-obtain the accompaniment music in response to the musical style switched by the user, re-stretch the first voice, and play the second video.

Therefore, in this embodiment, the audio and video processing application may not only obtain the accompaniment music according to the default musical style, stretch the first voice based on the timestamps of the beats in the accompaniment music, and play the second video, but may also re-determine the musical style of the accompaniment music in response to a user selection of one musical style control among a plurality of musical style controls, obtain new accompaniment music based on the re-determined musical style of the accompaniment music, re-stretch the first voice based on timestamps of beats in the new accompaniment music, and play the second video. In this way, the user demand for customizing the musical style of the accompaniment music is satisfied. Since the background music possesses the musical style of the accompaniment music, the user demand for customizing the musical style of the background music is also satisfied.

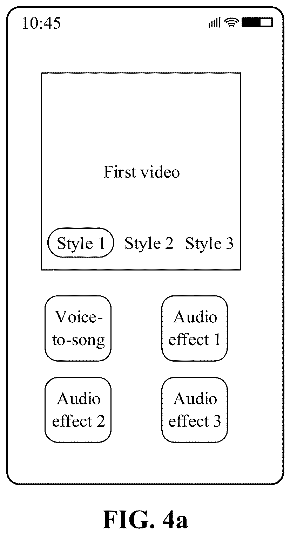

FIG. 4a is a schematic diagram of a user selection of a musical style according to an embodiment of the present disclosure. As shown in FIG. 4a, in a specific embodiment, after the audio and video processing application obtains the first video, the user may first click a voice-to-song control. The audio and video processing application obtains accompaniment music according to a default music style of accompaniment music, stretches the first voice based on timestamps of beats in the accompaniment music, adds instrumental sounds to the accompaniment music based on the stretched first voice to obtain background music, generates the second video based on the stretched first voice, background music, and first set of images, and plays the second video. If the user is dissatisfied with the default music style, the user may switch the selected music style control among a plurality of music style controls by horizontally swiping the screen, thereby switching the music style of the accompaniment music. The audio and video processing application obtains new accompaniment music according to the switched musical style of accompaniment music, re-stretches the first voice again based on timestamps of beats in the new accompaniment music, and plays the second video.

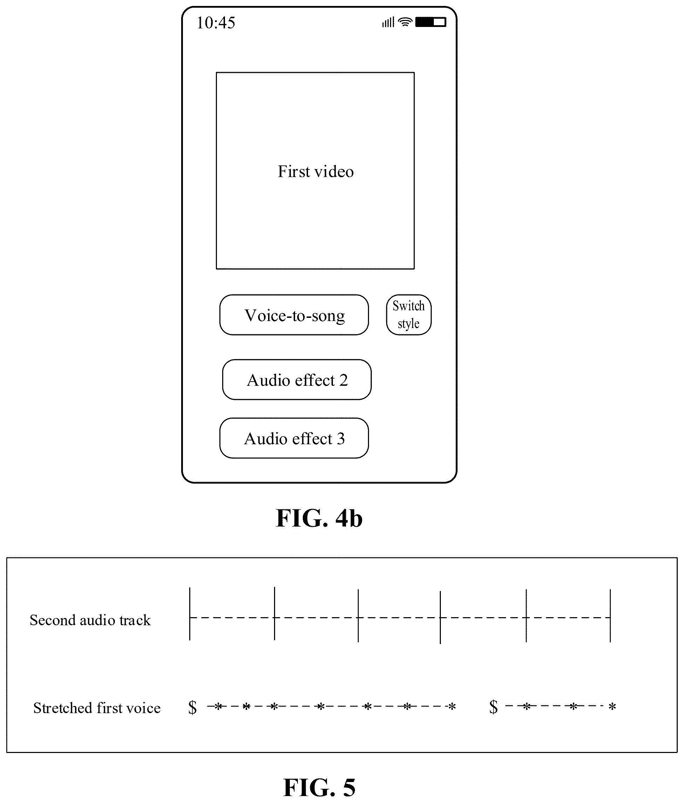

FIG. 4b is a schematic diagram of a user selection of a musical style according to another embodiment of the present disclosure. As shown in FIG. 4b, in another specific embodiment, after the audio and video processing application obtains the first video, the user may first click a voice-to-song control. The audio and video processing application obtains accompaniment music according to a default musical style of accompaniment music, stretches the first voice based on timestamps of beats in the accompaniment music, adds instrumental sounds to the accompaniment music based on the stretched first voice to obtain background music, generates the second video based on the stretched first voice, the background music, and the first set of images, and plays the second video. If the user is dissatisfied with the default musical style, the user may switch the selected musical style control among a plurality of musical style controls by clicking a switching button, thereby switching the musical style of the accompaniment music. The audio and video processing application obtains new accompaniment music according to the switched musical style of accompaniment music, re-stretches the first voice based on timestamps of beats in the new accompaniment music, and plays the second video.

It can be seen that, by implementing this embodiment, the user may independently select a desired music style from a plurality of music styles, and play the second video based on the selected music style, such that the background music possesses the selected music style, thereby satisfying the user's requirement of independently selecting the music style of the background music.

In one embodiment, the background music comprises a first audio track and a second audio track. The first audio track comprises an instrumental audio track, and the second audio track comprises an audio track of the background music other than the instrumental audio track.

A timestamp of a stretched first syllable in the stretched first voice is the same as a timestamp of an instrumental sound in the first audio track, and a timestamp of a stretched first syllable in the stretched first voice is the same as a timestamp of a beat in the second audio track.

In this embodiment, the background music comprises the first audio track and the second audio track. The first audio track is an instrumental audio track that corresponds to the instrumental sound added to the accompaniment music as described above, and the second audio track is an accompaniment audio track that corresponds to the accompaniment music as described above. Since the background music is composed of the first audio track and the second audio track, the second audio track may also be referred to as an audio track of the background music other than the instrumental audio track.

For the stretched first syllable, the first audio track, and the second audio track, the first syllable is stretched according to a timestamp of a beat of the second audio track, so the timestamp of the stretched first syllable in the stretched first voice is the same as the timestamp of the beat in the second audio track. When the first audio track is added into the second audio track, an instrumental sound needs to be added at the timestamp of the stretched first syllable. For example, a drum sound is added at the start playback timestamp of the stretched first syllable. Therefore, the timestamp of the stretched first syllable in the stretched first voice is the same as the timestamp of the instrumental sound in the first audio track. The timestamp of the instrumental sound may be the start timestamp of the instrumental sound.

In a specific embodiment, after the start playback timestamp of each first syllable in the first voice have been stretched based on the timestamp of the beat in the second audio track, for each stretched first syllable in the stretched first voice, a representative pitch of the stretched first syllable is determined. The representative pitch of each stretched first syllable may be the pitch that occurs most frequently among individual pitches contained in each stretched first syllable. An instrumental sound having the same pitch as the representative pitch of each stretched first syllable is generated. For example, a drum sound having the same pitch as the representative pitch of each stretched first syllable is generated. The instrumental sound having the same pitch is added at the start playback timestamp of each stretched first syllable, such that the stretched first syllable in the stretched first voice is synchronously played with the instrumental sound. The added instrumental sounds form the first audio track.

It can be seen that, by implementing this embodiment, the background music includes the first audio track and the second audio track. The first audio track includes the instrumental audio track, and the second audio track includes the audio track of the background music other than the instrumental audio track. The timestamp of the stretched first syllable in the stretched first voice is the same as the timestamp of the instrumental sound in the first audio track, and is the same as the timestamp of the beat in the second audio track. By adding the instrumental audio track and setting the timestamp of the instrumental sound, the stretched first syllable in the stretched first voice can be synchronously played with the instrumental sound in the first audio track, which enables the vocal part of the stretched first voice to sound more rhythmic and enhances the musicality of the background music.

In a specific embodiment, the above method process may further include selecting accompaniment music corresponding to the first voice from a database based on the music style and beat information of the first voice, in which the music style includes a default music style of the audio and video processing application and a music style selected by the user. The music style may include, for example, R&B, RAP, and the like. The beat information of the first voice includes the BPM (Beat Per Minute) of the first voice. The accompaniment music is used to form the second audio track.

In this embodiment, first, the start playback timestamp of each first syllable is detected, for example, by using a DSP (Digital Signal Processing) algorithm to detect the start playback timestamp of each first syllable. The duration of each first syllable is obtained by taking the difference between the start playback timestamps of two adjacent first syllables. Then, based on the durations of the respective first syllables, the beat information of the first voice is determined. A median value among the durations of the respective first syllables may be selected, and the beat information of the first voice may be calculated based on the median value, for example, by dividing 60 by the median value to obtain the BPM of the first voice as the beat information of the first voice.

Multiple pieces of accompaniment music are stored in the database, each piece of accompaniment music corresponding to one type of music style and one type of beat information. For example, the database may store sixteen pieces of accompaniment music across four different music styles, wherein there are four pieces of accompaniment music having different BPMs for each type of music style. In view of this, based on the music style and the beat information of the first voice, a piece of music having a music style consistent with the above music style and beat information matching the beat information of the first voice is selected from the database as the accompaniment music corresponding to the first voice.

In this embodiment, respective pieces of accompaniment music whose music styles are consistent with the above music style may first be selected from the database. Each selected piece of accompaniment music corresponds to one BPM range, and the BPM ranges corresponding to the respective selected pieces of accompaniment music are different. It is determined whether the BPM of the first voice falls within any of the BPM ranges corresponding to the selected pieces of accompaniment music. If not, the BPM of the first voice is processed, for example, by being multiplied by 2 or divided by 2, and it is again determined whether the BPM of the first voice falls within any of the BPM ranges corresponding to the selected pieces of accompaniment music. The BPM of the first voice is repeatedly processed until it falls within one of the BPM ranges corresponding to the selected pieces of accompaniment music. The accompaniment music corresponding to the matched BPM range is then used as the accompaniment music corresponding to the first voice.

In the database, each piece of accompaniment music corresponds to one BPM range that may be obtained by slightly adjusting the BPM of the accompaniment music. For example, if the BPM of a piece of accompaniment music is 70, its corresponding BPM range may be [70-2.5, 70+2.5]. By slightly adjusting the corresponding BPM of the accompaniment music into one range, the efficiency of selecting accompaniment music corresponding to the first voice from the database can be improved.

It can be seen that, by implementing this embodiment, the beat information of the first voice can be efficiently and quickly determined based on the durations of the respective first syllables in the first voice, and suitable accompaniment music can be accurately matched for the first voice from the database based on the music style and the beat information of the first voice.

In one embodiment, a timestamp of a first stressed syllable in each of voice segments in the stretched first voice is the same as a timestamp of a first beat of a bar in the second audio track, or is the same as a timestamp of a middle beat of the bar in the second audio track.

The voice segments are obtained by segmenting the first voice based on a silent fraction in the first voice; and the beat comprises a first beat of each bar in the second audio track and a middle beat of each bar in the second audio track.

In this embodiment, the silent fraction(s) is present in the first voice. The first voice can be segmented based on the silent fraction(s) in the first voice, resulting in multiple voice segments, with two adjacent voice segments being separated by one silent fraction. A silent fraction refers to a segment that, after being detected by a DSP algorithm, is determined not to contain any sound information. A voice segment refers to a segment that, after being detected by the DSP algorithm, is determined to contain sound information.

Each voice segment of the first voice includes at least one stressed syllable. The stressed syllable is a first syllable whose audio energy is greater than the audio energy of the two adjacent first syllables on either side. In this embodiment, the first stressed syllable is determined in each voice segment, and the first stressed syllable is the stressed syllable with the earliest timestamp. The above beats in the second audio track include the first beat of each bar in the second audio track and the middle beat of each bar in the second audio track. For example, if one bar of the second audio track contains 4 beats, the above beats in the second audio track include the first beat of each bar and the beat corresponding to the middle position of each bar.

In this embodiment, for the first stressed syllable in each voice segment of the first voice, the start playback timestamp of the first stressed syllable is stretched based on the start playback timestamps of the first beat and middle beat of each bar in the second audio track. The stretched start playback timestamp of the first stressed syllable is the same as the start playback timestamp of the first beat of the bar in the second audio track, or is the same as the start playback timestamp of the middle beat of the bar in the second audio track.

In a specific example, first, for the first stressed syllable in the first voice segment of the first voice, the start playback timestamp of this syllable is stretched to be the same as the start playback timestamp of the first beat of the first bar in the second audio track. Then, for the first stressed syllable in the second voice segment of the first voice, in a case where the interval between timestamps of respective first syllables in the same voice segment remains unchanged, the start playback timestamp of the first stressed syllable in the second voice segment is stretched to be the same as the start playback timestamp of the first beat of a bar in the second audio track, or to be the same as the start playback timestamp of the middle beat of the bar. This process is repeated for the subsequent voice segments, stretching the start playback timestamp of the first stressed syllable in each voice segment accordingly.

FIG. 5 is a schematic diagram of stretching a first stressed syllable in each voice segment of a first voice according to an embodiment of the present disclosure. As shown in FIG. 5, "$" denotes a stressed syllable, and "*" denotes a non-stressed syllable. For the first stressed syllable in each voice segment of the first voice, in a case where the interval between timestamps of respective first syllables in the same voice segment remains unchanged, the start playback timestamp of the first stressed syllable in each voice segment is stretched to be the same as the start playback timestamp of the first beat of a bar in the second audio track, or to be the same as the start playback timestamp of the middle beat of the bar. In FIG. 5, in a case where the interval between timestamps of respective first syllables in the same voice segment remains unchanged, since the length of the first voice segment in the diagram is relatively long, the first stressed syllable of the second voice segment is caused to be shifted to the middle beat of the fourth bar in the diagram. Considering that the first beat of the fifth bar is located after the middle beat of the fourth bar, if the timestamp were to be shifted to the first beat of the fifth bar, playback of the first stressed syllable of the second voice segment in the diagram would be delayed. Therefore, shifting to the first beat of the fifth bar is not chosen here.

It can be seen, by implementing this embodiment, the timestamp of the first stressed syllable in each voice segment of the first voice can be stretched to be the same as the timestamp of the first beat of a bar in the second audio track, or to be the same as the timestamp of the middle beat of the bar in the second audio track, such that the timestamp of the stretched first stressed syllable in each voice segment can match the rhythm of the second audio track, thereby improving the user experience in browsing the second video.

In one embodiment, the above method further comprises:
determining audio energies of the respective first syllables in the first voice;
for each of the first syllables in the first voice, judging whether the first syllable is a stressed syllable based on an audio energy of the first syllable and an audio energy of a first syllable adjacent to the first syllable; and determining a first stressed syllable in each of the voice segments based on whether each of the first syllables is a stressed syllable.

In this embodiment, for each first syllable in each first voice, since the first syllable has a certain pronunciation duration, sampling values of respective audio energy magnitudes of the first syllable within the pronunciation duration are obtained. Root mean square processing is performed on the sampling values of the respective audio energy magnitudes to obtain the audio energy of the first syllable. For each first syllable in each first voice, based on the audio energy of the first syllable and the audio energy of a first syllable adjacent to the first syllable in the first voice (the adjacent first syllable may be located in a different voice segment), the first syllable whose audio energy is greater than that of the two adjacent first syllables immediately preceding and following it is determined as a stressed syllable. After determining the respective stressed syllables in the first voice, the first stressed syllable in each voice segment can be determined, the first stressed syllable being the stressed syllable with the earliest timestamp in each voice segment.

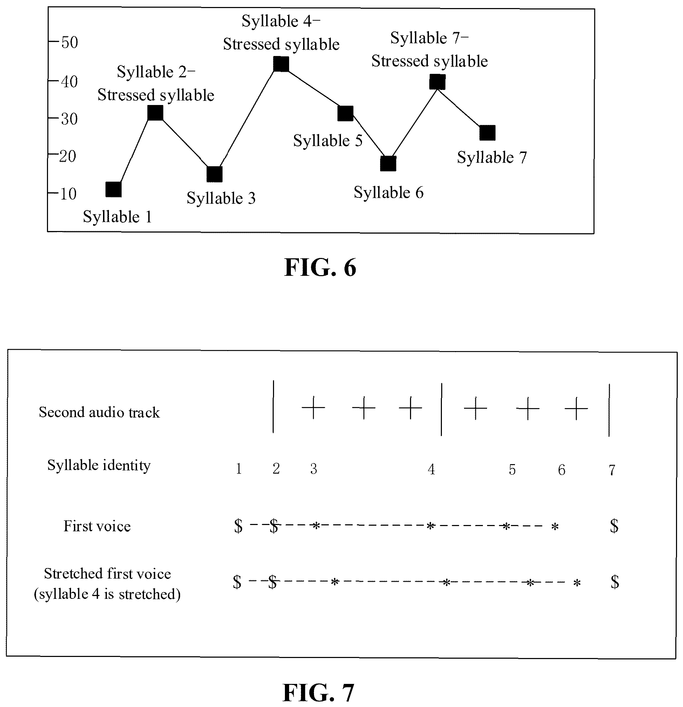

FIG. 6 is a schematic diagram of a first audio energy according to an embodiment of the present disclosure. As shown in FIG. 6, in the first voice, each first syllable has its own audio energy. In FIG. 6, the horizontal axis represents the index of the syllable, and the vertical axis represents the magnitude of the audio energy. If the audio energy of a certain first syllable is greater than that of the two adjacent first syllables immediately preceding and following it, the audio energy of the first syllable exhibits a local peak, and therefore the first syllable is a stressed syllable.

It can be seen that, by implementing this embodiment, respective stressed syllables in the first voice can be quickly determined by calculating the audio energies of the first syllables, thereby identifying the first stressed syllable in each voice segment.

In one embodiment, the method further comprises:
determining a start timestamp and an end timestamp of the second audio track based on a timestamp of the stretched first stressed syllable in a first one of the voice segments and a timestamp of the stretched first stressed syllable in a last one of the voice segments; and
playing music in the second audio track in a loop based on the start timestamp and the end timestamp.

In this embodiment, after the timestamp (for example, the start playback timestamp) of the first stressed syllable in each voice segment has been stretched, based on the timestamp of the stretched first stressed syllable in the first voice segment in the first voice, in a case where the interval between the timestamps of the first stressed syllable in the first voice segment and the first syllable in the first voice segment is ensured to be unchanged, the timestamp of the first syllable in the first voice segment is stretched, that is, the timestamp of the first syllable in the first voice segment is shifted based on the timestamp of the stretched first stressed syllable in the first voice segment.

After the timestamp of the first stressed syllable in each voice segment has been stretched, based on the timestamp of the stretched first stressed syllable in the last voice segment in the first voice, in a case where the interval between the timestamps of the first stressed syllable in the last voice segment and the last syllable in the last voice segment is ensured to be unchanged, the timestamp of the last syllable in the last voice segment is stretched, that is, the timestamp of the last syllable in the last voice segment is shifted based on the timestamp of the stretched first stressed syllable in the last voice segment.

In this embodiment, the start timestamp of the second audio track is further set to be equal to the timestamp of the stretched first stressed syllable in the first voice segment, and the end timestamp of the second audio track is set to be equal to the timestamp of the stretched last syllable in the last voice segment, so that accompaniment music in the second audio track is played from the first stressed syllable in the first voice segment to the last syllable in the last voice segment. Since the accompaniment music stored in the database is music that can be played in a loop, music in the second audio track is played in a loop based on the start timestamp and the end timestamp of the second audio track, and the music in the second audio track is the accompaniment music. For example, if the length of the accompaniment music obtained from the database is 50 seconds, and the time length between the start timestamp and the end timestamp of the second audio track is 150 seconds, then the accompaniment music is played in a loop three times.

It can be seen that, by implementing this embodiment, the start timestamp and the end timestamp of the second audio track can be determined, and the music in the second audio track, i.e., the accompaniment music, can be played in a loop based on the start timestamp and the end timestamp of the second audio track, such that the playback duration of the accompaniment music is determined based on the duration of the stretched first voice as a reference standard, thereby ensuring that the semantics expressed by the user in the stretched first voice are not lost, and generating the second video while preserving the complete semantics expressed by the user.

In one example, firstly, accompaniment music is selected from a database based on the music style and the beat information of the first voice. Then, the timestamp of the first stressed syllable in each voice segment in the first voice is stretched to be the same as the timestamp of the first beat of a bar in the accompaniment music, or to be the same as the timestamp of the middle beat of the bar in the accompaniment music. During the stretching process, if the duration of the accompaniment music is insufficient, the accompaniment music is played in a loop so as to complete the stretching of the timestamp of the first stressed syllable in the last voice segment.

Next, based on the timestamp of the stretched first stressed syllable in the first voice segment and the timestamp of the stretched first stressed syllable in the last voice segment, a start timestamp and an end timestamp of the accompaniment music are determined. The accompaniment music is played in a loop based on the start timestamp and the end timestamp of the accompaniment music, and the second audio track is formed.

In one embodiment, the above method further comprises:
for a second syllable in the first voice, selecting, from two beats in the second audio track having timestamps closest to a timestamp of the second syllable before being stretched, a matched first beat for the second syllable, based on audio energies and timestamps of the two beats; and
stretching a timestamp of the second syllable to be the same as a timestamp of the first beat;
wherein the second syllable is a syllable among the respective first syllables of the first voice other than a first stressed syllable in each of voice segments, a first syllable in a first one of the voice segments, and a last syllable in a last one of the voice segments; and the voice segments are obtained by segmenting the first voice based on a silent fraction in the first voice.

In this embodiment, the second syllable is included in the respective first syllables of the first voice. The second syllable is a syllable among the respective first syllables of the first voice other than the first stressed syllable in each voice segment, the first syllable in the first voice segment, and the last syllable in the last voice segment. Through the preceding process, the timestamps of the first stressed syllables in each voice segment, the first syllable in the first voice segment, and the last syllable in the last voice segment have already been stretched, and therefore the timestamp of the second syllable need to be stretched here.

In this embodiment, a plurality of beats is contained in the second audio track. The beat may be the first beat of each bar, or the last beat of each bar, or the beat at a preset position such as the position of each beat, the position of each half beat, and the position of each quarter beat, in the second audio track. The timestamp of the beat may be the start playback timestamp of the beat.

In this embodiment, each beat of the second audio track has a corresponding audio energy. As an example, for each beat in the second audio track, the audio energy at the beat may be determined based on sampled values of the audio energy magnitude of the second audio track at the beat. When the number of sampled values of the audio energy magnitude of the second audio track at the beat is greater than one, the plurality of sampled values is subjected to root mean square processing to obtain the audio energy of the second audio track at the beat. As an example, the second audio track may be divided into a plurality of beats in a manner of one-quarter-beat segmentation. the first beat is the start position of a first bar in the second audio track, the second beat is the position of a quarter beat of the first bar in the second audio track, and the third beat is the position of a half beat of the first bar in the second audio track. For the first beat, sampled values of respective sampled points of the second audio track within a time interval from the start position of the first bar to the position of a quarter beat of the first bar are obtained, and the respective sampled points are subjected to root mean square processing to obtain the audio energy magnitude of the second audio track at the first beat. For the second beat, sampling values of respective sampled points of the second audio track within a time interval from the position of a quarter beat of the first bar to the position of a half beat of the first bar are obtained, and the respective sampled points are subjected to root mean square processing to obtain the audio energy magnitude of the second audio track at the second beat.

Of course, the audio energy magnitude of the second audio track may also be represented in the form of an audio energy graph. For example, the playback timestamp of each beat is used as the horizontal axis, the audio energy magnitude is used as the vertical axis, and the graph has a columnar pattern corresponding to each beat, and the color of the columnar pattern represents the audio energy magnitude of the beat.

In this embodiment, for each second syllable, two beats whose timestamps are closest to the timestamp of the second syllable before being stretched are determined among respective beats of the second audio track, that is, a beat positioned before the second syllable before being stretched and a beat positioned after the second syllable before being stretched in time sequence (for example, in playback time sequence) are determined. A matched first beat for the second syllable is selected from the two beats based on the audio energies of these two beats and the timestamps of these two beats (for example, the start playback timestamps), and the timestamp of the second syllable is stretched to be the same as the timestamp of the first beat.

It can be seen that, by implementing this embodiment, for the second syllable in the first voice, based on the audio energies of two beats in the second audio track having timestamps are closest to the timestamp of the second syllable before being stretched and the timestamps of the two beats, a matched first beat for the second syllable can be selected from the two beats, and the timestamp of the second syllable can be stretched to be the same as the timestamp of the first beat, thereby achieving the effect of stretching the timestamp of the second syllable based on the rhythm of the second audio track.

In one embodiment, selecting, from the two beats in the second audio track having timestamps closest to a timestamp of the second syllable before being stretched, the matched first beat for the second syllable, based on audio energies and timestamps of the two beats, comprises:
based on the audio energies of the two beats, a first time length required to stretch the timestamp of the second syllable before being stretched to the timestamps of the two beats respectively, selecting the matched first beat for the second syllable from the two beats, and a variation of a second time length; the second time length comprising a time length between the timestamp of the second syllable before being stretched and a first timestamp.

Firstly, the audio energies of the two beats described above are obtained, the timestamp of the second syllable before being stretched and the timestamps of the two beats are obtained, and the first time lengths required to stretch the timestamp of the second syllable before being stretched to the timestamp of each of the two beats respectively are calculated. One beat corresponds to one first time length. The first time length is equal to the difference between the timestamp of the second syllable before being stretched and the timestamp of each beat.

Next, the variation of the second time length is obtained. The second time length includes the time length between the timestamp of the second syllable before being stretched and the first timestamp. Since the timestamp of the second syllable is stretched, this stretching causes a variation in the second time length. The variation of the second time length is equal to the second time length of the second syllable before being stretched minus the second time length of the second syllable after stretching. The second time length of the second syllable before being stretched is the time length between the timestamp of the second syllable before being stretched and the first timestamp. The second time length of the second syllable after stretching is the time length between the timestamp of the stretched second syllable and the first timestamp after the timestamp of the second syllable is stretched to the timestamp of each of the above two beats, i.e., also is equal to the time length between the timestamp of each of the above two beats and the first timestamp. Each beat corresponds to one changed second time length, and also corresponds to one variation of the second time length.

Finally, based on the audio energies of the above two beats, the first time length corresponding to each beat, and the variation of the second time length corresponding to each beat, a matched first beat for the second syllable is selected from the above two beats.

It can be seen that, by implementing this embodiment, based on the audio energies of the above two beats, the first time lengths required to stretch the timestamp of the second syllable before being stretched to the timestamps of the above two beats respectively, and the variations of the second time lengths, a matched first beat for the second syllable can be selected from the above two beats, thereby achieving the technical effect of accurately determining the first beat.

In one embodiment, the first beat is a beat that is selected from the above two beats in an order of audio energy magnitudes, that causes the first time length to be less than a length threshold value, and that causes the variation of the second time length to satisfy a variation requirement; and the first timestamp comprises a timestamp of a stretched first syllable located before the second syllable and/or a timestamp of a stretched first syllable located after the second syllable.

In this embodiment, firstly, it is determined whether the beat having the larger audio energy among the two closest beats is the first beat. The specific determination process includes: determining whether the first time length corresponding to the beat having the larger audio energy is less than a length threshold value, and determining whether the variation of the second time length corresponding to the beat having the larger audio energy satisfies a variation requirement. The variation requirement may be that the variation of the second time length is less than a variation threshold value, or that a ratio obtained by dividing the variation of the second time length by the second time length of the second syllable before being stretched is less than a ratio threshold value.

If the first time length corresponding to the beat having the larger audio energy is less than the length threshold value, and the corresponding variation of the second time length satisfies the variation requirement, then the beat is determined as the first beat. Otherwise, it is determined whether the beat having the smaller audio energy among the two closest beats is the first beat. If the beat having the smaller audio energy is also not the first beat, the second audio track may be re-divided to obtain beats with finer granularity, and a first beat is selected for the second syllable from the beats with finer granularity.

The process of selecting the first beat for the second syllable from the beats with finer granularity is similar to the foregoing process, and likewise includes: selecting, from two beats with finer granularity in the second audio track having timestamps closest to the timestamp of the second syllable before being stretched, a matched first beat for the second syllable, based on audio energies and timestamps of the two beats with finer granularity.

In this embodiment, the first timestamp includes one or all of: the timestamp of a stretched first syllable located before the second syllable, and the timestamp of a stretched first syllable located after the second syllable. The timestamp of the stretched first syllable remains unchanged due to the stretching process. After the second syllable is stretched to any beat, the change in the time length between the second syllable and the first timestamp is measured, and whether the stretching distance of the second syllable is too long can be measured, so as to avoid stretching the second syllable too long. Similarly, measuring the relationship between the first time length and the length threshold value can also avoid stretching the second syllable too long.

FIG. 7 is a schematic diagram of stretching a timestamp of a second syllable according to an embodiment of the present disclosure. As shown in FIG. 7, the serial numbers of respective second syllables are 1-7, wherein syllable 1 is the first syllable of a voice segment, and its timestamp has been fixed; syllable 2 is the first stressed syllable of the voice segment, and its timestamp has also been fixed, which is the same as the timestamp of the first beat of the first bar in the second audio track in the diagram; and syllable 7 is the first stressed syllable of the next voice segment, and its timestamp has also been fixed, which is the same as the timestamp of the first beat of the third bar in the second track in the diagram.

In FIG. 7, the second syllables are 3, 4, 5, and 6 respectively. For syllable 4, the two nearest beats corresponding to it are the third beat of the first bar and the first beat of the second bar in the diagram, respectively. Through the above process, the first beat of the second bar is determined as the first beat, and therefore, the timestamp of syllable 4 is stretched to be the same as the timestamp of the first beat of the second bar. In FIG. 7, the first timestamp includes the stretched timestamps of syllable 2 and syllable 7. The variation of the second time includes the variation of the time length between syllable 4 and syllable 2 before and after the timestamp of syllable 4 is stretched, and the variation of the time length between syllable 4 and syllable 7.

In addition, according to the previous description, the second audio track is played from the first stressed syllable in the first voice segment to the last syllable in the last voice segment. Therefore, in a case where the first voice segment in the diagram is the first voice segment of the first voice, for the syllable(s) between the first syllable and the first stressed syllable in the first voice segment in the diagram, after the timestamps of the first syllable and the first stressed syllable in the first voice segment in the diagram are fixed, the timestamp(s) of the syllable(s) between the two syllables do not need to be stretched because the syllable(s) between the two syllables do not have the corresponding second audio track.

It can be seen that, by implementing the embodiment, since the first beat is the beat that is selected from the two nearest beats in an order of audio energy magnitudes, that causes the first time length to be less than the length threshold value, and that causes the variation of the second time length to satisfy the variation requirement, the first beat can enable the stretching amount of the timestamp of the second syllable to be within a suitable range, thereby avoiding stretching the second syllable too long.

As described above, the second audio track includes a plurality of beats. The beat may be the first beat of each bar, or the last beat of each bar, or the beat at a preset position such as the position of each beat, the position of each half beat, and the position of each quarter beat, in the second audio track. The timestamp of the beat may be the start playback timestamp of the beat.

In one embodiment, the beats in the second audio track may be obtained by dividing the second audio track according to a division rule. The division rule may include a plurality of sub-rules having a hierarchical relationship. When the sub-rule at a higher level fails to satisfy the selection condition for the first beat of the second syllable, the second audio track is re-divided using the sub-rule at a lower level, and a first beat corresponding to the second syllable is reselected.

Specifically, using FIG. 7 as an example, firstly, according to the sub-rule that each beat in the second audio track is a beat, the second audio track is divided into multiple beats. For syllable 4, the two nearest beats corresponding to it are the third beat of the first bar and the first beat of the second bar in the diagram, respectively. If, through the above process, the third beat of the first bar and the first beat of the second bar are not the first beat, then according to the sub-rule of the lower level, the sub-rule that each half beat in the second audio track is a beat, the second audio track is divided into multiple beats, and a first beat is reselected for syllable 4. If syllable 4 corresponds to the 3.8th beat of the first bar of the second audio track before being stretched, after each half beat in the second audio track is divided as a beat, the two nearest beats corresponding to syllable 4 are the 3.5th beat of the first bar and the first beat of the second bar in the diagram, respectively. By dividing the beats in the second audio track in this way at multiple levels, each second syllable can be matched to a suitable first beat.

In one embodiment, the above method further comprises:
for a second syllable in the first voice, stretching, based on a stretching order of the respective second syllables, a timestamp of the second syllable that is earlier in the stretching order; and
stretching a timestamp of a second syllable that is later in the stretching order, based on a stretching amount of the timestamp of the second syllable that is earlier in the stretching order and the stretching order;
wherein the second syllable is a syllable among the respective first syllables of the first voice other than a first stressed syllable in each of voice segments, a first syllable in a first one of the voice segments, and a last syllable in a last one of the voice segments; and the voice segments are obtained by segmenting the first voice based on a silent fraction in the first voice.

In this embodiment, the second syllable is included in the respective syllables of the first voice, and is the syllable among the respective first syllables of the first voice other than a first stressed syllable in each of voice segments, a first syllable in a first one of the voice segments, and a last syllable in a last one of the voice segments. Through the previous process, the timestamps of the first stressed syllable in each voice segment, the first syllable in the first voice segment, and the last syllable in the last voice segment have been stretched, so it is necessary to stretch the timestamp of the second syllable here.

In this embodiment, a stretching order of respective second syllables is determined. The timestamp of the second syllable that is earlier in the stretching order is stretched based on the stretching order. When the second syllable that is later in the stretching order is stretched, the timestamp of the second syllable that is later in the stretching order is stretched based on the stretching amount of the timestamp of the second syllable that is earlier in the stretching order and the above stretching order. In this case, the stretching amount of the timestamp of the second syllable is equal to the timestamp interval length between the timestamp of the second syllable before being stretched and the timestamp of the second syllable after stretching. For example, based on the stretching amount of the timestamp of the second syllable that is earlier in the stretching order, the timestamp of the second syllable that is later in the stretching order is changed, and the changed timestamp is the timestamp before being stretched of the second syllable that is later in the stretching order. the timestamp of the second syllable that is later in the stretching order is stretched, based on the timestamp before being stretched of the second syllable that is later in the stretching order,.

Taking FIG. 7 as an example, respective second syllables include syllables 3, 4, 5, and 6, and the respective second syllables are stretched one by one according to the stretching order, such as the stretching order of 4, 3, 5, and 6. When each second syllable (such as syllable 4) is stretched, the timestamp of the second syllable before syllable 4 (that is, syllable 3) and the timestamps of the second syllable after syllable 4 (that is, syllables 5 and 6) are updated as the timestamp of syllable 4 is stretched.

As can be seen from FIG. 7, for syllables 1, 2, and 7 that have been stretched before, their timestamps will not change along with the change of syllable 4. For syllables 3, 5, and 6, their timestamps change along with the stretching of the timestamp of syllable 4. The change principle is: the amount of change in the timestamp of each syllable is the same as the stretching amount of the timestamp of syllable 4. After the stretching of the timestamp of syllable 4 is completed, the timestamp after the change of syllable 3 is used as the timestamp of syllable 3 before being stretched for stretching.

In the process of stretching the timestamp of syllable 3, since syllable 4 has been stretched, the timestamp of syllable 4 does not change. In the process of stretching the timestamp of syllable 6, since syllables 4 and 3 have been stretched, the timestamps of syllables 4 and 3 do not change. In addition, in the process of stretching the timestamp of syllable 6, the timestamp of syllable 5 may still change, and the timestamp after the change of syllable 5 is used as the timestamp of syllable 5 before being stretched for stretching.

It can be seen that, by implementing this embodiment, based on the stretching order of respective second syllables, the timestamp of the second syllable that is earlier in the stretching order can be stretched. The timestamp of the second syllable that is later in the stretching order is stretched based on the stretching amount of the timestamp of the second syllable that is earlier in the stretching order and the stretching order, such that the second syllable that is stretched later can be stretched in combination with the stretching amount of the timestamp of the second syllable that is earlier in the stretching order, thereby improving the accuracy in stretching the timestamp of the second syllable.

In another embodiment, the above method further comprises:
determining, based on audio energies of the respective second syllables in the first voice and whether the respective second syllables are stressed syllables, a stretching order of the respective second syllables.

In this embodiment, for respective second syllables in the first voice, the audio energy of each second syllable is calculated, and it is determined whether each second syllable is a stressed syllable. The stretching order of the respective second syllables is determined based on the audio energies of the respective second syllables in the first voice and the judgment result of whether each second syllable is a stressed syllable. The audio energy of the second syllable can be obtained by performing root mean square processing on the sampled values of the audio energy magnitude of the second syllable.

In one embodiment, among respective second syllables in the first voice, the stressed syllable is determined to be stretched before the unstressed syllable, and respective stressed syllables in respective second syllables and respective unstressed syllables in respective second syllables are respectively composed of syllable sets. In each syllable set, the stretching order of respective syllables in the syllable set is determined according to the audio energies of respective syllables in the syllable set. For example, respective stressed syllables in all the second syllables can be combined into a syllable combination, and respective unstressed syllables in all the second syllables can be combined into a syllable set. The stretching order of any stressed syllable is earlier than the stretching order of any unstressed syllable. In each syllable set, the stretching order of respective syllables in the syllable set from first to last is determined according to the order of the audio energies of respective syllables in the syllable set from high to low.

It can be seen that, by implementing this embodiment, the stretching order of respective second syllables in the first voice can be determined according to the audio energies of respective second syllables in the first voice and whether respective second syllables are stressed syllables, so as to achieve the effect of orderly stretching the second syllable.

In one embodiment, after the timestamp stretching on each first syllable in the first voice is completed, the occurrence time of the volume peak of each stretched first syllable in the first voice can further be adjusted.

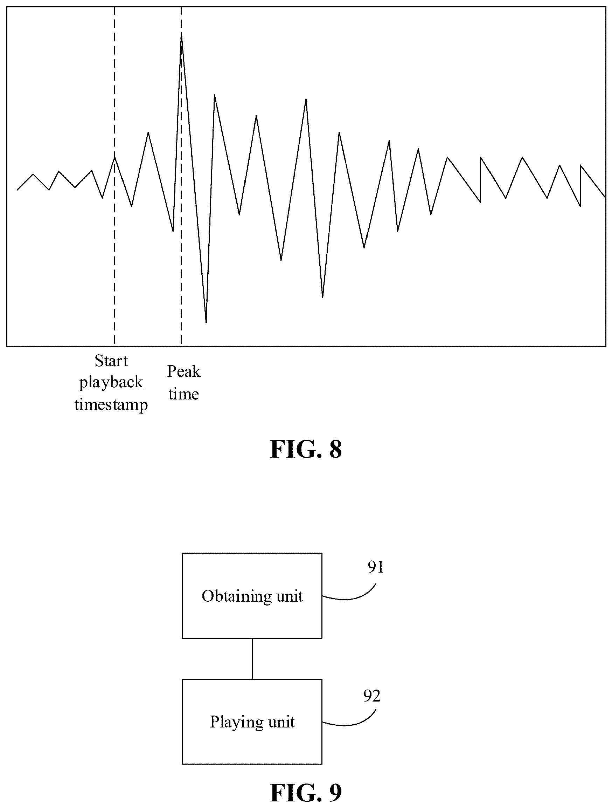

FIG. 8 is a schematic diagram of a volume peak of a first syllable according to an embodiment of the present disclosure. In FIG. 8, taking one first syllable as an example, the horizontal axis represents time and the vertical axis represents volume. As shown in FIG. 8, for each first syllable, it has one start playback timestamp and one volume peak occurrence timestamp. Generally, the start playback timestamp is located before the volume peak occurrence timestamp. In this embodiment, the volume peak occurrence timestamp of each stretched first syllable may be adjusted forward to shorten the distance between the start playback timestamp and the volume peak occurrence timestamp, such that the sound of the stretched first syllable can quickly reach the volume peak after it starts playing, thereby improving the user's listening experience.

In this embodiment, after the timestamp of each first syllable in the first voice is stretched, before the first audio track is added for the second audio track, a pitch of the stretched first voice can further be adjusted. For example, taking the pitch of the second audio track as a target, the pitch of the stretched first voice is adjusted to the same pitch as the second audio track, so that the stretched first syllable sounds musical and matches the second audio track.

In this embodiment, after the timestamp of each first syllable in the first voice is stretched, an audio effect of the first voice can further be optimized, such as compressing or equalizing the human voice in the first voice, so as to achieve a better human voice effect.

In summary, various embodiments of the present disclosure provide a data processing method that can convert voice into music with a certain musical style. Since the first voice will not be greatly damaged during the processing of the first voice, such as cutting off some sentences or repeating some sentences, only the timestamp of the first syllable in the first voice is adjusted, so the entire semantics of the first voice can be retained, thereby ensuring that the user's semantic information is not lost. Since the timestamp of the stretched first syllable in the stretched first voice is the same as the timestamp of the beat in the background music, and the timestamp of each frame image in the first set of images in the second video is the same as the timestamp of the corresponding stretched first syllable in the stretched first voice, the stretched first syllable in the stretched first voice in the second video can be displayed and played synchronously with the corresponding each frame image, thereby improving the user experience in watching the second video.

An embodiment of the present disclosure further provides a data processing apparatus, which may be located inside a terminal equipment and is used to implement the above data processing method. FIG. 9 is a structural schematic diagram of a data processing apparatus according to an embodiment of the present disclosure. As shown in FIG. 9, the apparatus comprises:
an obtaining unit 91, configured to obtain a first video, in response to a first operation performed by a user, the first video comprising a first set of images and a first voice, and a timestamp of each frame image in the first set of images being the same as a timestamp of a corresponding first syllable in the first voice; and
a playing unit 92, configured to play a second video, in response to a second operation performed by the user, the second video comprising the first set of images, a stretched first voice, and background music, and a timestamp of a stretched first syllable in the stretched first voice being the same as a timestamp of a beat in the background music, and a timestamp of each frame image in the first set of images in the second video being the same as a timestamp of a corresponding stretched first syllable in the stretched first voice.

Optionally, the obtaining unit 91 may specifically be configured to:
in response to a video upload operation performed by the user, obtain the first video; or
in response to a recording operation performed by the user, obtain the first video, wherein the first video comprises the first voice recorded by the user.

Optionally, the playing unit 92 may specifically be configured to:
in response to a selection, by the user, of one music style control among a plurality of music style controls, play the second video, wherein the background music has the music style.

Optionally, the background music comprises a first audio track and a second audio track; the first audio track comprises an instrumental audio track, and the second audio track comprises an audio track of the background music other than the instrumental audio track;

A timestamp of a stretched first syllable in the stretched first voice is the same as a timestamp of an instrumental sound in the first audio track, and a timestamp of a stretched first syllable in the stretched first voice is the same as a timestamp of a beat in the second audio track.

Optionally, a timestamp of a first stressed syllable in each of voice segments in the stretched first voice is the same as a timestamp of a first beat of a bar in the second audio track, or is the same as a timestamp of a middle beat of the bar in the second audio track;

The voice segments are obtained by segmenting the first voice based on a silent fraction in the first voice; and the beat comprises a first beat of each bar in the second audio track and a middle beat of each bar in the second audio track.

Optionally, the apparatus further comprises a stress determining unit configured to:
determine audio energies of the respective first syllables in the first voice;
for each of the first syllables in the first voice, judge whether the first syllable is a stressed syllable based on an audio energy of the first syllable and an audio energy of a first syllable adjacent to the first syllable; and determine a first stressed syllable in each of the voice segments based on whether each of the first syllables is a stressed syllable.

Optionally, the apparatus further comprises a loop playback unit configured to:
determine a start timestamp and an end timestamp of the second audio track based on a timestamp of the stretched first stressed syllable in a first one of the voice segments and a timestamp of the stretched first stressed syllable in a last one of the voice segments; and
play music in the second audio track in a loop based on the start timestamp and the end timestamp.

Optionally, the apparatus further comprises a first beat determining unit configured to:
for a second syllable in the first voice, select, from two beats in the second audio track having timestamps closest to a timestamp of the second syllable before being stretched, a matched first beat for the second syllable, based on audio energies and timestamps of the two beats; and
stretch a timestamp of the second syllable to be the same as a timestamp of the first beat;
wherein the second syllable is a syllable among the respective first syllables of the first voice other than a first stressed syllable in each of voice segments, a first syllable in a first one of the voice segments, and a last syllable in a last one of the voice segments; and the voice segments are obtained by segmenting the first voice based on a silent fraction in the first voice.

Optionally, the first beat determining unit is specifically configured to:
select the matched first beat for the second syllable from the two beats based on the audio energies of the two beats, a first time length required to stretch the timestamp of the second syllable before being stretched to the timestamps of the two beats respectively, and a variation of a second time length; the second time length comprising a time length between the timestamp of the second syllable before being stretched and a first timestamp.

Optionally, the first beat is a beat that is selected from the two beats in an order of audio energy magnitudes, that causes the first time length to be less than a length threshold value, and that causes the variation of the second time length to satisfy a variation requirement; and the first timestamp comprises a timestamp of a stretched first syllable located before the second syllable and/or a timestamp of a stretched first syllable located after the second syllable.

Optionally, the apparatus further comprises a stretching unit configured to:
for a second syllable in the first voice, stretch, based on a stretching order of the respective second syllables, a timestamp of a second syllable that is earlier in the stretching order;
stretch a timestamp of a second syllable that is later in the stretching order, based on a stretching amount of the timestamp of the second syllable that is earlier in the stretching order and the stretching order; and
wherein the second syllable is a syllable among the respective first syllables of the first voice other than a first stressed syllable in each of voice segments, a first syllable in a first one of the voice segments, and a last syllable in a last one of the voice segments; and the voice segments are obtained by segmenting the first voice based on a silent fraction in the first voice.

Optionally, the apparatus further comprises an order determining unit configured to:
determine, based on audio energies of the respective second syllables in the first voice and whether the respective second syllables are stressed syllables, a stretching order of the respective second syllables.

The data processing apparatus in the embodiments of the present disclosure can implement each of the processes described in the embodiments of the above data processing method, achieving the same effects and functions. These details are not repeated here.

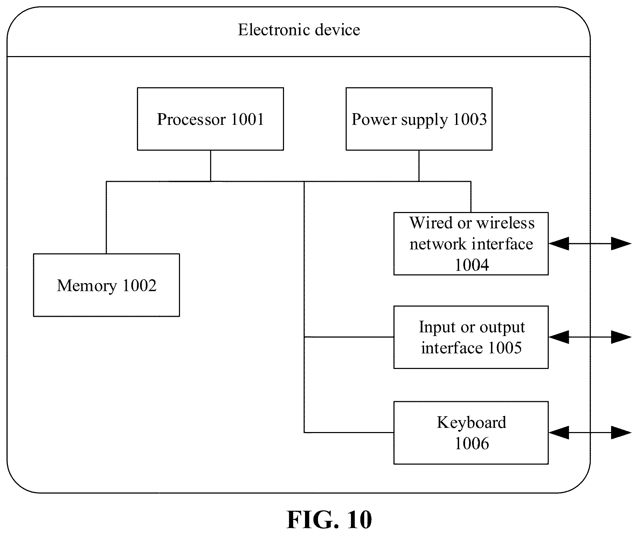

An embodiment of the present disclosure further provides an electronic device. FIG. 10 is a structural schematic diagram of an electronic device according to an embodiment of the present disclosure. As shown in FIG. 10, the electronic device may have relatively large differences due to different configurations or performances, and may include one or more processors 1001 and a memory 1002, and one or more applications or data may be stored in the memory 1002. In this case, the memory 1002 may be a temporary storage or a permanent storage. The application stored in the memory 1002 may include one or more modules (not shown in the figure), and each module may include a series of computer executable instructions in the electronic device. Furthermore, the processor 1001 may be configured to communicate with the memory 1002 and execute the series of computer executable instructions in the memory 1002 on the electronic device. The electronic device may further include one or more power supplies 1003, one or more wired or wireless network interfaces 1004, one or more input or output interfaces 1005, one or more keyboards 1006, etc.

In a specific embodiment, an electronic device comprises a processor; and a memory configured to store computer executable instructions. When executed, the computer executable instructions cause the processor to implement the following process:
in response to a first operation performed by a user, obtaining a first video, wherein the first video comprises a first set of images and a first voice, and a timestamp of each frame image in the first set of images is the same as a timestamp of a corresponding first syllable in the first voice; and
in response to a second operation performed by the user, playing a second video, wherein the second video comprises the first set of images, a stretched first voice, and background music, and a timestamp of a stretched first syllable in the stretched first voice is the same as a timestamp of a beat in the background music, and a timestamp of each frame image in the first set of images in the second video is the same as a timestamp of a corresponding stretched first syllable in the stretched first voice.

The electronic device in the embodiments of the present disclosure can implement each of the processes described in the embodiments of the above data processing method, achieving the same effects and functions. These details are not repeated here.

Another embodiment of the present disclosure provides a computer readable storage medium for storing computer executable instructions. When executed by a processor, the computer executable instructions implement the following process:
in response to a first operation performed by a user, obtaining a first video, wherein the first video comprises a first set of images and a first voice, and a timestamp of each frame image in the first set of images is the same as a timestamp of a corresponding first syllable in the first voice; and
in response to a second operation performed by the user, playing a second video, wherein the second video comprises the first set of images, a stretched first voice, and background music, and a timestamp of a stretched first syllable in the stretched first voice is the same as a timestamp of a beat in the background music, and a timestamp of each frame image in the first set of images in the second video is the same as a timestamp of a corresponding stretched first syllable in the stretched first voice.

The computer readable storage medium in the embodiments of the present disclosure can implement each of the processes described in the embodiments of the above data processing method, achieving the same effects and functions. These details are not repeated here.

In various embodiments of the present disclosure, the computer readable storage medium includes a read-only memory (ROM), a random access memory (RAM), a magnetic disk or an optical disk, etc.

In the 1990s, improvements to a technology could be clearly distinguished as hardware improvements (for example, improvements to circuit structures such as diodes, transistors, switches, etc.) or software improvements (improvements to method processes). However, with the development of technology, many improvements to method processes today can be regarded as direct improvements to hardware circuit structures. Designers almost always obtain the corresponding hardware circuit structure by programming the improved method process into the hardware circuit. Therefore, it cannot be said that an improvement in a method process cannot be implemented using a hardware entity module. For example, a programmable logic device (PLD) (such as a field programmable gate array (FPGA)) is such an integrated circuit whose logical function is determined by the user programming the device. Designers can "integrate" a digital system on a PLD by programming themselves, without having to ask chip manufacturers to design and make dedicated integrated circuit chips. Moreover, nowadays, instead of manually making integrated circuit chips, this kind of programming is mostly implemented by "logic compiler" software, which is similar to the software compiler used when developing and writing programs, and the original code before compilation must also be written in a specific programming language, which is called hardware description language (HDL). There is not only one kind of HDL, but many kinds, such as ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM, RHDL (Ruby Hardware Description Language), etc. The most commonly used ones are VHDL (Very-High-Speed Integrated Circuit Hardware Description Language) and Verilog. Those skilled in the art should also know that it is only necessary to program the method process slightly in the above-mentioned hardware description languages and program it into the integrated circuit, and then it is easy to obtain the hardware circuit that implements the logic method process.

The controller may be implemented in any suitable manner, for example, the controller may take the form of a microprocessor or processor and a computer readable medium storing a computer readable program code (e.g., software or firmware) executable by the (micro)processor, a logic gate, a switch, an application specific integrated circuit (ASIC), a programmable logic controller, and an embedded microcontroller, examples of which include but are not limited to the following microcontrollers: ARC 625D, Atmel AT91SAM, Microchip PIC18F26K20, and Silicone Labs C8051F320, and the memory controller may further be implemented as part of the control logic of the memory. It is also known to those skilled in the art that, in addition to implementing the controller in a purely computer readable program code manner, the controller may be implemented in the form of a logic gate, a switch, an application specific integrated circuit, a programmable logic controller, and an embedded microcontroller by logically programming the method steps. Therefore, such a controller may be considered as a hardware component, and the apparatus for implementing various functions included therein may also be considered as a structure within the hardware component. Or even, the apparatus for implementing various functions may be considered as both a software module for implementing the method and a structure within the hardware component.

The systems, apparatuses, modules or units described in the above embodiments can be implemented by a computer chip or entity, or by a product with a certain function. A typical implementation device is a computer. Specifically, the computer can be, for example, a personal computer, a laptop computer, a cellular phone, a camera phone, a smart phone, a personal digital assistant, a media player, a navigation device, an email device, a game console, a tablet computer, a wearable device, or a combination of any of these devices.

For the convenience of description, the above apparatuses are described separately by function into various units. Of course, when implementing the embodiments of the present disclosure, the function(s) of each unit can be implemented in the same or multiple software and/or hardware.

It should be understood by those skilled in the art that one or more embodiments of the present disclosure may be provided as a method, system or computer program product. Therefore, one or more embodiments of the present disclosure may take the form of a complete hardware embodiment, a complete software embodiment, or an embodiment combining software and hardware. Moreover, one or more embodiments of the present disclosure may take the form of a computer program product implemented on one or more computer usable storage media (including but not limited to disk storage, CD-ROM, optical storage, etc.) containing computer usable program code therein.

The present disclosure is described with reference to the flowcharts and/or block diagrams of the methods, devices (systems), and computer program products according to the embodiments of the present disclosure. It should be understood that each process and/or block in the flowchart and/or block diagram, as well as the combination of processes and/or blocks in the flowchart and/or block diagram, can be implemented by computer program instructions. These computer program instructions can be provided to a processor of a general purpose computer, a special purpose computer, an embedded processor, or other programmable data processing device to produce a machine, so that the instructions executed by the processor of the computer or other programmable data processing device produce an apparatus for implementing the functions specified in one or more processes in the flowchart and/or one or more blocks in the block diagram.

These computer program instructions can also be stored in a computer readable memory that can guide a computer or other programmable data processing device to work in a specific manner, so that the instructions stored in the computer readable memory produce a manufactured product including an instruction apparatus, which implements the functions specified in one or more processes in the flowchart and/or one or more blocks in the block diagram.

These computer program instructions may also be loaded onto a computer or other programmable data processing device, so that a series of operating steps are performed on the computer or other programmable device to produce a computer implemented process, so that the instructions executed on the computer or other programmable device provide steps for implementing the functions specified in one or more processes of the flowchart and/or one or more boxes of the block diagram.

It should also be noted that the terms "include", "comprise" or any other variant thereof are intended to cover non-exclusive inclusion, so that a process, method, commodity or device including a series of elements includes not only those elements, but also other elements not explicitly listed, or also includes elements inherent to such process, method, commodity or device. In the absence of further restrictions, the elements defined by the phrase "include one..." do not exclude the existence of other identical elements in the process, method, commodity or device including the elements.

One or more embodiments of the present disclosure may be described in the general context of computer executable instructions executed by a computer, such as a program module. Generally, the program module includes a routine, a program, an object, a component, a data structure, etc. that performs a specific task or implements a specific abstract data type. One or more embodiments of the present disclosure may also be practiced in distributed computing environments in which tasks are performed by a remote processing device connected through a communication network. In a distributed computing environment, a program module may be located in local and remote computer storage media, including a storage device.

Various embodiments in the present disclosure are described in a progressive manner, and the same or similar parts between the embodiments can be referred to each other, and each embodiment focuses on the differences from other embodiments. In particular, for the system embodiment, since it is basically similar to the method embodiment, the description is relatively simple, and the relevant parts can be referred to the partial description of the method embodiment.

The above description is only the embodiments of the present disclosure and is not intended to limit the present disclosure. For those skilled in the art, the present disclosure may have various modifications and variations. Any modification, equivalent substitution, improvement, etc. made within the spirit and principle of the present disclosure shall be included in the scope of the claims of the present disclosure.

## Claims

1. A data processing method, comprising:
in response to a first operation performed by a user, obtaining a first video, the first video comprising a first set of images and a first voice, and a timestamp of each frame image in the first set of images being the same as a timestamp of a corresponding first syllable in the first voice; and
in response to a second operation performed by the user, playing a second video, the second video comprising the first set of images, a stretched first voice, and background music, and a timestamp of a stretched first syllable in the stretched first voice being the same as a timestamp of a beat in the background music, and a timestamp of each frame image in the first set of images in the second video being the same as a timestamp of a corresponding stretched first syllable in the stretched first voice.

2. The method of claim 1, wherein in response to the first operation performed by the user, obtaining the first video comprises:
in response to a video upload operation performed by the user, obtaining the first video; or
in response to a recording operation performed by the user, obtaining the first video, wherein the first video comprises the first voice recorded by the user.

3. The method of claim 1, wherein in response to the second operation performed by the user, playing the second video comprises:
in response to a selection, by the user, of one music style control among a plurality of music style controls, playing the second video, wherein the background music has the music style.

4. The method of any of claims 1 to 3, wherein:
the background music comprises a first audio track and a second audio track; the first audio track comprises an instrumental audio track, and the second audio track comprises an audio track of the background music other than the instrumental audio track; and
a timestamp of a stretched first syllable in the stretched first voice is the same as a timestamp of an instrumental sound in the first audio track, and a timestamp of a stretched first syllable in the stretched first voice is the same as a timestamp of a beat in the second audio track.

5. The method of claim 4, wherein:
a timestamp of a first stressed syllable in each of voice segments in the stretched first voice is the same as a timestamp of a first beat of a bar in the second audio track, or is the same as a timestamp of a middle beat of the bar in the second audio track; and
the voice segments are obtained by segmenting the first voice based on a silent fraction in the first voice; and the beat comprises a first beat of each bar in the second audio track and a middle beat of each bar in the second audio track.

6. The method of claim 5, wherein the method further comprises:
determining audio energies of the respective first syllables in the first voice;
for each of the first syllables in the first voice, judging whether the first syllable is a stressed syllable based on an audio energy of the first syllable and an audio energy of a first syllable adjacent to the first syllable; and
determining a first stressed syllable in each of the voice segments based on whether each of the first syllables is a stressed syllable.

7. The method of claim 6, wherein the method further comprises:
determining a start timestamp and an end timestamp of the second audio track based on a timestamp of the stretched first stressed syllable in a first one of the voice segments and a timestamp of the stretched first stressed syllable in a last one of the voice segments; and
playing music in the second audio track in a loop based on the start timestamp and the end timestamp.

8. The method of claim 4, wherein the method further comprises:
for a second syllable in the first voice, selecting, from two beats in the second audio track having timestamps closest to a timestamp of the second syllable before being stretched, a matched first beat for the second syllable, based on audio energies and timestamps of the two beats; and
stretching a timestamp of the second syllable to be the same as a timestamp of the first beat;
wherein the second syllable is a syllable among the respective first syllables of the first voice other than a first stressed syllable in each of voice segments, a first syllable in a first one of the voice segments, and a last syllable in a last one of the voice segments; and the voice segments are obtained by segmenting the first voice based on a silent fraction in the first voice.

9. The method of claim 8, wherein selecting, from the two beats in the second audio track having timestamps closest to the timestamp of the second syllable before being stretched, the matched first beat for the second syllable, based on audio energies and timestamps of the two beats, comprises:
based on the audio energies of the two beats, a first time length required to stretch the timestamp of the second syllable before being stretched to the timestamps of the two beats respectively, and a variation of a second time length, selecting the matched first beat for the second syllable from the two beats; the second time length comprising a time length between the timestamp of the second syllable before being stretched and a first timestamp.

10. The method of claim 9, wherein,
the first beat is a beat that is selected from the two beats in an order of audio energy magnitudes, that causes the first time length to be less than a length threshold value, and that causes the variation of the second time length to satisfy a variation requirement; and the first timestamp comprises a timestamp of a stretched first syllable located before the second syllable and/or a timestamp of a stretched first syllable located after the second syllable.

11. The method of claim 4, wherein the method further comprises:
for a second syllable in the first voice, stretching, based on a stretching order of the respective second syllables, a timestamp of a second syllable that is earlier in the stretching order;
stretching a timestamp of a second syllable that is later in the stretching order, based on a stretching amount of the timestamp of the second syllable that is earlier in the stretching order and the stretching order; and
wherein the second syllable is a syllable among the respective first syllables of the first voice other than a first stressed syllable in each of voice segments, a first syllable in a first one of the voice segments, and a last syllable in a last one of the voice segments; and the voice segments are obtained by segmenting the first voice based on a silent fraction in the first voice.

12. The method of claim 11, wherein the method further comprises:
determining, based on audio energies of the respective second syllables in the first voice and whether the respective second syllables are stressed syllables, a stretching order of the respective second syllables.

13. A data processing apparatus, comprising:
an obtaining unit, configured to obtain a first video, in response to a first operation performed by a user, the first video comprising a first set of images and a first voice, and a timestamp of each frame image in the first set of images being the same as a timestamp of a corresponding first syllable in the first voice;
a playing unit, configured to play a second video, in response to a second operation performed by the user, the second video comprising the first set of images, a stretched first voice, and background music, and a timestamp of a stretched first syllable in the stretched first voice being the same as a timestamp of a beat in the background music, and a timestamp of each frame image in the first set of images in the second video being the same as a timestamp of a corresponding stretched first syllable in the stretched first voice.

14. An electronic device, comprising:
a processor; and
a memory configured to store computer executable instructions, wherein the computer executable instructions, when executed, cause the processor to implement steps of the method of any of claims 1 to 12.

15. A computer readable storage medium for storing computer executable instructions, wherein the computer executable instructions, when executed by a processor, implement steps of the method of any of claims 1 to 12.

16. A computer program product stored in a non-transitory computer readable medium and comprising machine executable instructions, wherein the machine executable instructions, when executed, cause a machine to perform the method of any of claims 1 to 12.
